# EUROPÄISCHE PATENTSCHRIFT

(11) **EP 0 543 821 B1**
(45) Veröffentlichungstag und Bekanntmachung des Hinweises auf die Patenterteilung: **22.02.1995**
(21) Anmeldenummer: 91910620.3
(22) Anmeldetag: 03.06.1991
(51) Int. Cl.: G06F 11/16

(54) **EINRICHTUNG ZUR FUNKTIONSÜBERWACHUNG EXTERNER SYNCHRONISATIONS-BAUGRUPPEN IN EINEM MEHRRECHNERSYSTEM**
DEVICE FOR MONITORING THE FUNCTIONS OF EXTERNAL SYNCHRONISATION UNITS IN A MULTI-COMPUTER SYSTEM
INSTALLATION POUR LE CONTROLE DES FONCTIONS DE MODULES DE SYNCHRONISATION EXTERNES DANS UN SYSTEME A PLUSIEURS ORDINATEURS

(30) Priorität: 14.08.1990 EP 90115583
(43) Veröffentlichungstag der Anmeldung: 02.06.1993
(73) Patentinhaber: SIEMENS AKTIENGESELLSCHAFT, 80333 München (DE)
(72) Erfinder: GRONEMEYER, Michael, D-3302 Weddel 1 (DE)
(86) Internationale Anmeldenummer: EP9101020
(87) Internationale Veröffentlichungsnummer: WO9203785

(56) Entgegenhaltungen:
- EP-A- 172 569
- WO-A-85/05707
- DE-A- 2 458 224
- US-A- 3 921 149
- US-A- 4 733 353

## Beschreibung

Die Erfindung bezieht sich auf eine Einrichtung nach dem Oberbegriff des Patentanspruches 1. Eine derartige Einrichtung ist aus der DE-AS 12 698 27 bekannt.

Mindestens bei solchen Mehrrechnersystemen, bei denen die Einzelrechner gesonderte Taktgeber aufweisen und Daten untereinander auszutauschen haben, ist es erforderlich, den Datenfluß der Rechner von Zeit zu Zeit zu synchronisieren. Dies gilt insbesondere dort, wo die Rechner aus Sicherheits- und ggf. Verfügbarkeitagründen vervielfacht sind und sich zum Aufdecken von Fehlfunktionen laufend auf Übereinstimmung vergleichen. Eine Rechnersynchronisation ist auch für die gleichzeitige Eingabe von Daten (Meldungen u. Kommandos) über externe Interrupts erforderlich. Die maximal zulässigen Zeitspannen, innerhalb deren eine gegenseitige Synchronisierung erfolgen muß, sind im wesentlichen abhängig von der Taktfrequenz der Rechner-Taktgeneratoren und der Genauigkeit, mit denen diese Taktgeneratoren laufen.

Aus der DE-AS 19 52 926 ist ein Verfahren zur Synchronisierung zweier parallel arbeitender Datenverarbeitungseinheiten bekannt, von denen eine aktiv ist und die andere eine Reserveeinheit bildet. Die jeweils aktive Einheit generiert in periodischen Abständen Synchronisiersignale, die in der Reserveeinheit zum Nachführen des dortigen Taktgebers auf die Phasenlage der Taktsignale der betriebsführenden Einheit dienen. Dieses bekannte Verfahren ist für Mehrrechnersysteme mit mehreren betriebsführenden Rechnern nicht geeignet, weil derjenige Rechner, der die Synchronisiersignale ausgibt, beim Nachführen der Taktgeber der anderen Rechner deren Datenverarbeitung in nicht vorhersehbarer Weise beeinflußt.

Aus der DE-AS 21 55 159 ist eine Anordnung zum Synchronisieren einer Mehrzahl von Rechnern in einem Rechnersystem bekannt, bei der die gegenseitige Synchronisierung der Einzelrechner dadurch erfolgt, daß derjenige Rechner, der als erster einen in seinem Programm verankerten Synchronisationspunkt erreicht, ein Synchronisiersignal über eine für alle Rechner gemeinsame Leitung an die übrigen Rechner übermittelt. Dieses Synchronisiersignal wird in den übrigen Rechnern eine bestimmte Zeitlang gespeichert, sperrt die dort von den Rechnern selbst generierten Synchronisiersignale und aktiviert eine Impulserzeugungsschaltung, über die ein Zähler für Taktsignale in die gleiche Schaltstellung gesteuert wird wie zuvor der entsprechende Zähler des schnellsten Rechners. Damit ist der Synchronisiervorgang beendet. Bei dieser bekannten Anordnung zum Synchronisieren der Rechner eines Mehrrechnersystems wird der Ausfall eines Rechners bzw. der diesem zugeordneten Schaltmittel zur Synchronisierung nicht erkannt; es wird auch nicht geprüft, ob der Zähler in den langsamer laufenden Rechnern tatsächlich die vorgegebene Schaltstellung einnimmt oder nicht.

Aus der DE-AS 24 13 401 ist eine Einrichtung zum Synchronisieren eines 2 von 3-Rechnersystems bekannt, bei der die Bearbeitung eines neuen Befehls davon abhängig gemacht ist, daß mindestens zwei der drei Rechner das Ende des vorangehenden Befehls festgestellt haben. Verzögerungsglieder sorgen dafür, daß der jeweils langsamste Rechner die Befehlsausführung beenden kann und dann zusammen mit den anderen Rechnern gleichzeitig mit der Abarbeitung des folgenden Befehls beginnt. Kann er dies nicht, fällt er aus dem Tritt und kann von selbst nicht wieder in Synchronismus kommen. Das Rechnersystem als solches bleibt dann als 2 von 2-System funktionsfähig. Von Nachteil ist, daß der Ausfall des nicht synchronisierbaren Rechners nicht festgestellt wird, so daß auch keine Störungsbeseitigung veranlaßt wird. Der Ausfall eines weiteren Rechners führt damit zwangsweise zum Abschalten des Rechnersystems.

Aus der DE-AS 12 698 27 ist ein Verfahren und eine Einrichtung zur Synchronisierung von zwei parallel arbeitenden Datenverarbeitungsanlagen bekannt, bei der die von den beiden Datenverarbeitungseinrichtungen generierten Synchronisationssignale in einer Zeitüberwachung daraufhin überwacht werden, daß sie nicht unzulässig weit auseinanderlaufen. Ist dies der Fall, so erfolgt eine Programmunterbrechung wegen Zeitfehlers. Liegen die beiden Synchronisersignale innerhalb der durch die Zeitüberwachung gegebenen maximalen Zeitdauer, so bewirken sie über eine UND-Verknüpfung einen synchronen Programmstart in beiden Einzelrechnern. Da die Zeitüberwachung im laufenden Betrieb nicht ansprechen soll, muß sie durch Prüfprogramme auf Funktionsfähigkeit überprüft werden, damit sichergestellt ist, daß sie im Störungsfall auch tatsächlich wirksam ist. Diese Prüfprogramme beeinträchtigen die in den Datenverarbeitungseinrichtungen ablaufenden Anwenderprogramme in unerwünschter Weise und setzen die Arbeitsgeschwindigkeit des Rechnersystems herab.

Aus der DE-OS 34 31 169 ist ein Verfahren zur Synchronisation mehrerer parallel arbeitender Rechner bekannt, bei dem jeder Rechner auf ein von einem anderen Rechner her empfangenes, dessen Synchronisationsbereitschaft anzeigendes Signal sein Programm unterbricht und bei Vorliegen der Voraussetzungen seinerseits ein entsprechendes Signal an alle anderen Rechner ausgibt. Jeder Rechner beginnt mit der Abarbeitung des nächsten Programmschrittes, wenn alle Rechner des Rechnersystems ihre Synchronisationsbereitschaft signalisiert haben. Hier wird also die Verarbeitungsgeschwindigkeit des schnellsten Rechners an die des langsamsten Rechners des Mehrrechnersystems angepaßt. Um zu vermeiden, daß bei Ausfall eines Rechners grundsätzlich das gesamte Mehrrechnersystem nicht mehr weiterarbeiten kann, führen die Rechner das Programm auch bereits dann fort, wenn neben ihrem eigenen Synchronisationsbereitschaftssignal das entsprechende Signal eines weiteren Rechners vorliegt und eine bestimmte vorgegebene Mindestzeit verstrichen ist. Auch hier sind keine Mittel zum Erkennen und Abschalten eines außer Tritt gefallenen Einzelrechners vorhanden. Insbesondere sind keine Maßnahmen offenbart, wie im Störungsfall von den noch intakten Rechnern her auf einen nicht mehr sicher funktionsfähigen Rechner im Sinne einer Abtrennung dieses Rechners vom Mehrrechnersystem eingewirkt werden kann.

Aus der internationalen Anmeldung WO85/05707 ist ein Mehrrechnersystem bekannt, dessen Einzelrechner Synchronisations-einrichungen enthalten. Diese prüfen, ob innerhalb vorgegebener Zeitfenster von allen oder von einem bestimmten Teil aller Rechner Synchronisationssignale vorliegen und für den Fall, daß dies nicht so ist, wird über einen timer eine softwareroutine initiiert, die den betreffenden lokalen Prozessor abschaltet und bleibend außer Betrieb setzt; in diesem Fall werden Ersatzrechner wirksam geschaltet. Wenn die bekannten Synchronisationseinrichtungen in sicherheitskritischen Anwendungen eingesetzt werden sollen, sind sie in vorgegebenen zeitlichen Mindestabständen auf ihre Funktionsfähigkeit zu prüfen. Andernfalls bestände kein Verlaß darauf, daß sie im Störungsfall auch tatsächlich so reagieren wie es vorgesehen ist. Solche Prüfprogramme erhöhen in unerwünschter Weise die Grundlast eines Rechnersystems zusätzlich zu der ohnehin z. B. für die Synchronisierung erforderlichen Grundlast und wirken sich daher ungünstig auf die Leistungsfähigkeit und das Echtzeitverhalten des Rechnersystems aus.

Aufgabe der Erfindung ist es, eine Einrichtung nach dem Oberbegriff des Patentanspruches 1 anzugeben, die gewährleistet, daß ein defekter Rechner sicher erkannt und vom Rechnersystem abgetrennt wird, wenn er sich mit den übrigen Rechnern nicht mehr synchronisieren läßt. Dies soll geschehen, ohne daß Prüfprogramme den Anwenderfluß in unerwünschter Weise unterbrechen. Beim Außer-Tritt-fallen eines Einzelrechners sollen die übrigen Rechner z. B. im 2 von 2-Modus weiterbetrieben weden und nur, wenn sich der außer Tritt gefallene Rechner nicht ohne weiteres abtrennen läßt, soll das Rechnersystem insgesamt aus Sicherheitsgründen abgeschaltet werden.

Die Erfindung löst diese Aufgabe durch die kennzeichnenden Merkmale des Patentanspruches 1. Durch die Verwendung verdoppelter Zeitüberwacher zum Abschalten aller Einzelrechner des Mehrrechersystemes ist eine sichere Abschaltung nicht mehr synchronisierbarer Rechner gewährleistet; ein weiterer, auf eine kürzere Überwachungszeit eingestellter Zeitüberwacher sorgt dafür, daß beim Ausfall eines Einzelrechners die Zeitüberwacher der anderen Rechner nicht ansprechen und daß das Rechnersystem unter Ausschluß des als defekt erkannten Einzelrechners weiterarbeiten kann. Dies geschieht dadurch, daß dieser weitere Zeitüberwacher die Ausgangssignale des ausgefallenen Einzelrechners zwangsweise in Stellung "zur Synchronisation bereit" schaltet. Wenn dieser Zeitüberwacher ausfällt, veranlassen die verdoppelten Zeitüberwacher der anderen Rechner die sichere Abschaltung des Rechnersystemes.

Vorteilhafte Ausgestaltungen der erfindungsgemäßen Einrichtung sind in den Unteransprüchen angegeben.

Um eine sichere Abschaltung des Rechnersystems im Störungsfalle zu gewährleisten, ist nach der Lehre des Anspruches 2 vorgesehen, daß die verdoppelten Zeitüberwacher im Bedarfsfalle auf unterschiedliche Weise auf den Prozeß wirken, so daß auch bei Ausfall der von einem dieser Überwacher gesteuerten Schaltmittel noch ein sicheres Einwirken auf den Prozeß möglich ist.

Das Einstellen der Zeitüberwacher, über die bedarfsweise die Abtrennung eines Rechners vom Rechnersystem erfolgen soll, ist nach der Lehre des Anspruches 3 vom Vorhandensein entsprechender Steuersignale der noch funktionsfähigen Rechner bzw. der diesen zugeordneten Synchronisations-Baugruppen abhängig gemacht. Hierdurch wird sichergestellt, daß auch bei völliger Funktionsunfähigkeit eines Rechners die noch intakten Rechner den ausgefallenen Rechner sicher abtrennen können.
In Anwendung der Merkmale des Anspruches 4 ist vorgesehen, daß die die Zeitüberwacher in den Synchronisations-Baugruppen einstellenden Steuersignale der anderen Rechner über ODER-Glieder geführt sind, die bedarfsweise von dem zugehörigen Rechner her aktiv geschaltet werden können. Wenn der Rechner dies veranlaßt, sobald er vom Ausfall eines anderen Rechner des Mehrrechnersystems Kenntnis erlangt hat, dann ist es möglich, den defekten Rechner gemäß Anspruch 5 zu Wartungszwecken aus dem Mehrrechnersystem herauszulösen, ohne daß die Zeitüberwacher in den Synchronisations-Baugruppen der noch intakten Rechner durch Störsignale auf den Verbindungsleitungen ungewollt eingestellt werden können.
Die Steuerausgänge der Synchronisations-Baugruppe sind nach der Lehre des Anspruches 6 von den Steuereingängen der anderen Synchronisations-Baugruppen entkoppelt auszuführen, um ungewollte Rückwirkungen auszuschließen.
Um die Wartungsmaßnahmen zu vereinfachen, sehen die Merkmale des Anspruches 7 vor, auf den Synchronisations-Baugruppen Mittel zur optischen Kennzeichnung der Betriebszustände mindestens einiger ihrer diskreten Bauelemente anzuordnen. So läßt sich dort z.B. das Ansprechen der Zeitüberwacher oder das Einstellen des Fehlerspeichers kenntlich machen.
Eine ausreichend häufige Synchronisierung der Rechner des Mehrrechnersystems ergibt sich, wenn nach der Lehre des Anspruches 8 bestimmte auf den Rechnerbussen anliegende Steuersignale die Synchronisiervorgänge initiieren.
Um zu verhindern, daß das Mehrrechnersystem bei seiner Inbetriebnahme oder Wiederinbetriebnahme abgeschaltet wird, weil es noch nicht innerhalb der vorgegebenen Zeiten synchronisierbar ist, ist vorgesehen, in diesem Fall die Zeitüberwacher gemäß Anspruch 9 für eine bestimmte Zeit unwirksam zu schalten.

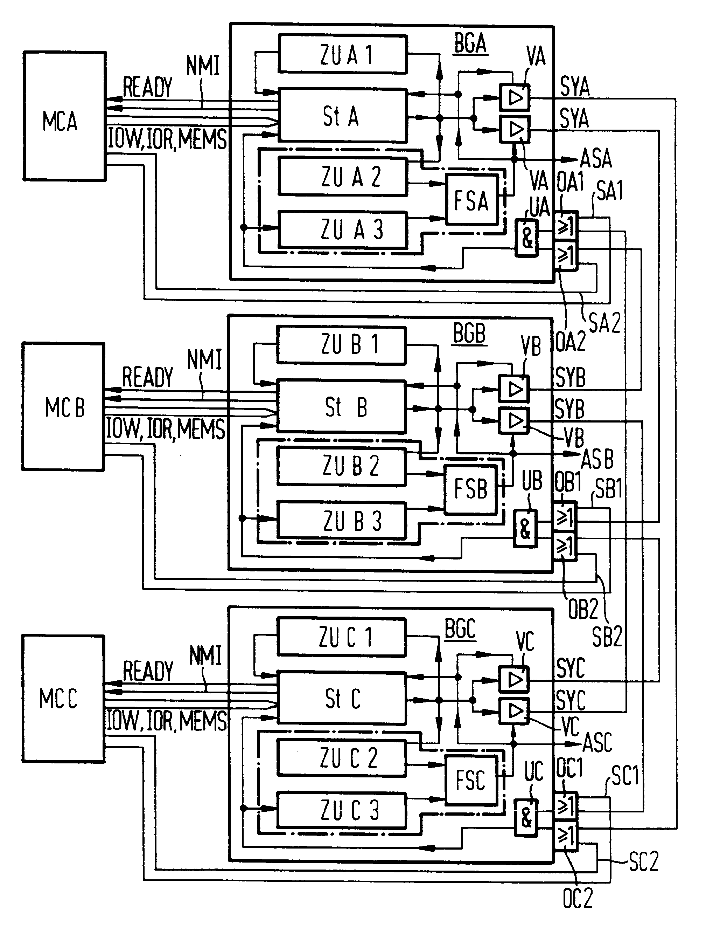

Ein Ausführungsbeispiel der Erfindung ist nachstehend anhand der Zeichnung näher erläutert.
Die Zeichnung zeigt ein aus drei Rechnern MCA bis MCC bestehendes sicheres 2 von 3-Rechnersystem, dessen Einzelrechner die gleiche Hardware aufweisen und die gleichen Daten mit der gleichen Software parallel verarbeiten. Die drei Rechner vergleichen auf hier nicht dargestellte Weise die auf ihren Bussen liegenden Daten über doppelt ausgeführte Überwachungskanäle zwischen den Rechnern laufend auf Übereinstimmung. Ein Rechner, dessen Daten von denen der übrigen Rechner abweicht, erkennt dies aus dem Datenvergleich und koppelt sich aus dem Rechnersystem aus, indem er seine Verbindung mindestens zur sicherheitsrelevanten Prozeßperipherie auftrennt; zusätzlich wird diese Verbindung auch über die Uberwachungskanäle unterbrochen. Das bis dahin als 2 von 3-System arbeitende sichere Mehrrechnersystem arbeitet dann als 2 von 2-System ebenfalls signaltechnisch sicher weiter, bis der ausgefallene Rechner instandgesetzt ist und in das Mehrrechnersystem wieder eingephast werden kann. In der Zeichnung sind die Schaltmittel, über die die vom Mehrrechnersystem zu steuernde Prozeßperipherie von den Rechnern her beaufschlagt wird, nicht dargestellt.

Jeder der Einzelrechner MCA bis MCC weist einen eigenen Taktgeber auf, der die Taktsignale für die Datenverarbeitung, die Datenübertragung und den Datenvergleich liefert. Diese Taktgeber sind vorzugsweise quarzgesteuert; ihre Taktfrequenz liegt in der Größenordnung von z.B. 10 MHz und die Quarzgenauigkeit bei etwa 10⁻⁴/s. Das bedeutet, daß die Takte der drei Taktgeber je Sekunde um bis zu 1000 Hz voneinander abweichen können. Hieraus folgt, daß die drei Rechner, obgleich sie die gleichen Steuerungsaufgaben nach dem gleichen Programm bearbeiten, dies nicht notwendigerweise genau gleichzeitig tun, sondern mehr oder weniger zeitversetzt. Ein Vergleich auf Übereinstimmung fällt dann negativ aus. Auch beim Einphasen von Daten in die Rechner treten Probleme auf, wenn die Rechner diese Daten auf unterschiedlichen Taktschritten ihres Programmes einlesen; so könnte der eine Rechner die Daten bereits einlesen, während ein anderer mit dem Einlesen noch wartet. In den Rechnern lägen dann - wenn auch nur vorübergehend - unterschiedliche Daten zur Verarbeitung an. Um einen ausreichend genauen Gleichlauf der Rechner beim Einlesen von Daten und beim Datenvergleich zu gewährleisten, ist es erforderlich, die drei Rechner laufend durch WAIT-Zyklen zu synchronisieren und zwar bei den angenommenen Parametern in einem zeitlichen Abstand von weniger als 1 ms. Bei einer konkreten Ausgestaltung des Mehrrechnersystems wird von einer gegenseitigen Synchronisierung in der Größenordnung von etwa 10 »s ausgegangen. Veranlaßt wird der Synchronisiervorgang durch die Einzelrechner des Rechnersystems beim Ein- und Auslesen von Peripherie-Daten und beim Durchführen bestimmter Speicherlesezyklen. Es sind dies die Steuersignale IOW, IOR und MEMS, wobei nur jedes zweite oder dritte Speicherlesesignal MEMS den Synchronisationsvorgang bewirken soll. Die Häufigkeit dieser Steuersignale ist so, daß die angestrebte Synchronisationszykluszeit von etwa 10 »s erreicht wird. Durch den Synchronisationsvorgang wird erreicht, daß die Programmbearbeitung der verschiedenen Rechner um höchstens zwei Takte auseinanderläuft. Dieses geringfügige Auseinanderlaufen der Programmbearbeitung läßt einen gegenseitigen Vergleich der auf den internen Rechnerbussen liegenden Daten auf Übereinstimmung jeweils während der Synchronisierungsphase zu.

Die Synchronisation der drei Rechner des Mehrrechnersystems geschieht über außerhalb der Rechner gelegene Hardwaresynchronisations-Baugruppen BGA bis BGC. Diese Hardwaresynchronisations-Baugruppen sind so ausgeführt, daß sie im Bedarfsfall, nämlich dann, wenn ein Rechner mit den übrigen Rechnern nicht mehr synchronisierbar ist, das Abtrennen des außer Tritt gefallenen Rechners vom Rechnersystem herbeiführen. Dieser Abtrennvorgang wird veranlaßt durch die noch intakten Rechner und liegt außerhalb der Einflußmöglichkeit des defekten Rechners, d.h. der defekte Rechner kann seine Abtrennung nicht verhindern. Unter dem Abtrennen eines Rechners muß nicht unbedingt das Abschalten dieses Rechners durch Unterbrechen seiner Stromversorgung verstanden sein; vielmehr reicht es aus, im Störungsfall mindestens die sicherheitsrelevanten Ausgabetore des defekten Rechners abzuschalten, so daß von diesem Rechner keine Gefährdungsmomente ausgehen können. Gleichzeitig kann über Prüfprogramme der Versuch unternommen werden, den Grund für die eingetretene Störung ausfindig zu machen, so daß baldmöglichst mit der Instandsetzung des Rechners begonnen werden kann.

Wenn die Rechner in der Programmbearbeitung an einem durch die vorstehend erwähnten Steuersignale definierten Synchronisationspunkt ankommen, so hält eine Hardwaresteuerung StA, StB bzw. StC auf den Synchronisations-Baugruppen BGA bis BGC die weitere Prozeßverarbeitung durch Nichtsetzen von READY-Signalen vorübergehend an, wobei der letzte bearbeitete Befehl quasi eingefroren wird und veranlaßt über Ausgabeverstärker VA, VB bzw. VC das Aufschalten von Synchronisationsbereitschaftssignalen SYA, SYB bzw. SYC auf die Verbindungsleitungen zu den anderen Synchronisations-Baugruppen. Die Synchronisationsbereitschaftssignale der jeweiligen Partnerrechner werden in den Synchronisations-Baugruppen der Rechner in UND-Gliedern UA, UB bzw. UC paarweise verknüpft und veranlassen dort das Einstellen von Hardware-Zeitüberwachern ZUA1 bis ZUA3, ZUB1 bis ZUB3 bzw. ZUC1 bis ZUC3. Jede Synchronisations-Baugruppe wertet die anliegenden Synchronisationsbereitschaftssignale aus und veranlaßt in bekannter Weise die Fortsetzung der Programmbearbeitung durch Aufschalten ihres READY-Signals, wenn die Synchronisationsbereitschaftssignale aller drei Rechner vorliegen. Dies geschieht zeitgleich bei allen Synchronisations-Baugruppen und wird getriggert durch den jeweils langsamsten Taktgeber der zu synchronisierenden Rechner. Ist dieser Taktgeber jedoch so langsam, daß ein Synchronisationsvorgang nicht innerhalb einer vorgegebenen Maximalzeit abgeschlossen werden kann oder bearbeitet einer der Rechner störungsbedingt eine andere Programmfolge als die anderen Rechner, so veranlassen die Synchronisations-Baugruppen dieser Rechner das Abtrennen des außer Tritt gefallenen Rechners vom Rechnersystem. Dazu stellen die Synchronisationsbereitschaftssignale der noch intakten Rechner in der Synchronisations-Baugruppe des abzutrennenden Rechners, z.B. des Rechners MCA, unter anderem den dortigen Zeitüberwacher ZUA3 ein, dessen Verzögerungszeit so gewählt ist, daß sie dem maximal zulässigen zeitlichen Nachlauf der Programmbearbeitung dieses Rechners gegenüber denen der anderen Rechner entspricht. Bei Nichtsynchronisierbarkeit des Rechners MCA stellt der Zeitüberwacher ZUA3 nach Ablauf einer Zeitdauer von z.B. 3 »s, d.h. nach etwa 30 Taktzyklen seit Signalisierung der Synchronisationsbereitschaft durch die anderen Synchronisations-Baugruppen, einen Fehlerspeicher FSA ein, der ein Abschaltsignal ASA zum Abtrennen der sicherheitsrelevanten Prozeßperipherie vom Rechner MCA ausgibt. Gleichzeitig veranlaßt die Synchronisations-Baugruppe BGA das Aufschalten von die Synchronisationsbereitschaft des abgeschalteten Rechners MCA vortäuschenden Pseudo-Synchronisationsbereitschaftssignalen SYA auf die zu den anderen Synchronisations-Baugruppen führenden Verbindungsleitungen. Hierdurch wird erreicht, daß das Rechnersystem nach dem Ausfall des Rechners MCA signaltechnisch sicher im 2 von 2-Modus weiterbetrieben werden kann. Die von der Synchronisations-Baugruppe des ausgefallenen Rechners ausgegebenen Pseudo-Synchronisationsbereitschaftssignale machen in den Synchronisations-Baugruppen der betriebsführenden Rechner die Vornahme des Synchronisationsvorganges unabhängig von der weiteren Mitwirkung der dem ausgefallenen Rechner zugeordneten Synchronisations-Baugruppe. Bei einem ausgefallenen Rechner MCA ist der in der Zeichnung obenliegende Eingang des UND-Gliedes UB und der in der Zeichnung unten liegenden Eingang des UND-Gliedes UC durch das von dieser Synchronisations-Baugruppe stammende Pseudo-Synchronisationsbereitschaftssignal SYA dauernd beeinflußt, so daß das betreffende UND-Glied beim Vorliegen des Synchronisationsbereitschaftssignales des jeweils noch vorhandenen Partnerrechners durchgesteuert wird und die Zeitüberwacher in den beiden Synchronisations-Baugruppen BGB und BGC einstellt. Entsprechende Abläufe ergeben sich bei Nichtsynchronisierbarkeit der Rechner MCB oder MCC, wobei die zugehörigen Synchronisations-Baugruppen entsprechende Abschaltsignale ASB bzw. ASC für die Ausgabetore zur Prozeßperipherie erzeugen.

Für die Synchronisierung der Rechner eines Mehrrechnersystems werden je Synchronisiervorgang üblicherweise nur sehr wenige Taktsignale benötigt, so daß für das laufende Synchronisieren insgesamt nur wenige Prozente der zur Verfügung stehenden Rechnerzeit benötigt werden. Nur ausnahmsweise spricht einer der Zeitüberwacher ZUA3 bis ZUC3 an und veranlaßt das Abschalten des zugehörigen Rechners.

Um sicherzustellen, daß diese Zeitüberwacher im Bedarfsfall tatsächlich so reagieren, wie es ihre Aufgabe ist, wäre es möglich, sie durch Prüfprogramme einer Funktionsprüfung zu unterwerfen. Dies würde jedoch eine Unterbrechung des jeweils laufenden Anwenderprogrammes erforderlich machen und Rechnerzeit kosten. Aus diesem Grunde weisen die Synchronisations-Baugruppen neben den ersten Zeitüberwachern ZUA3 bis ZUC3 weitere Zeitüberwacher ZUA2 bis ZUC2 auf, die über die zugehörige Steuerung gemeinsam mit dem ersten Zeitüberwacher eingestellt werden. Die Verzögerungszeit dieser zusätzlichen Zeitüberwacher ist größer als die der ersten Zeitüberwacher. Damit wird sichergestellt, daß, ordnungsgerechtes Funktionsverhalten vorausgesetzt, ein erster Zeitüberwacher ZUA3 ansprechen kann, bevor die weiteren Zeitüberwacher ZUB1, ZUB2, ZUC1, ZUC2 der anderen Rechner ansprechen. Mit dem Ansprechen dieser Zeitüberwacher würde das Mehrrechnersystem insgesamt abgeschaltet werden. Diese Zeitüberwacher wurden zuvor beim Abgeben des Synchronisationsbereitschaftssignals der betreffenden Synchronisations-Baugruppe eingestellt.

Aus Gründen der Sicherheit sind je Synchronisations-Baugruppe zwei Zeitüberwacher ZUA1, ZUA2 bzw. ZUB1, ZUB2 bzw. ZUC1, ZUC2 vorgesehen, die bei ihrem Ansprechen unabhängig voneinander und auf unterschiedliche Art und Weise die sicherheitsrelevanten Ausgabetore des von der Störung betroffenen Rechners sperren. Während der Zeitüberwacher ZUA2 der Synchronisations-Baugruppe BGA über den Ausgang des Fehlerspeichers FSA ein Abschaltsignal ASA für die Ausgabetore zur sicherheitsrelevanten Prozeßperipherie des Rechners MCA ausgibt, veranlaßt der Zeitüberwacher ZUA1 über die Steuerung StA ein Verlassen des Synchronisationshaltes und die Abschaltung der Ausgabetore zur Rechnerperipherie durch den Rechner MCA infolge eines nicht maskierbaren Interrupts NMI an den Rechner MCA. Findet nach dem Einstellen der Zeitüberwacher innerhalb der ihnen eingeprägten Verzögerungszeiten ein Synchronisationsvorgang statt, so veranlaßt die zugehörige Steuerung das Zurückstellen der Zeitüberwacher und den Programmstart über die READY-Steuerung.

Während die weiteren Zeitüberwacher ausschließlich aus Sicherheitsgründen vorhanden sind und die Wartezeit der Rechner auf einen Synchronisiervorgang begrenzen sowie als Ausfallebene für den zugehörigen ersten Zeitüberwacher fungieren, dienen die ersten Zeitüberwacher der Zuverlässigkeit des Rechnersystems, weil sie bei Nichtsynchronisierbarkeit eines Rechners wirksam werden sollen und über die Pseudo-Synchronisationsbereitschaftssignale die Fortsetzung der Programmbearbeitung in dem verbliebenen 2 von 2-Rechnersystemen ermöglichen.

Um die Wartung des Rechnersystems zu erleichtern, ist es von Vorteil, die Synchronisations-Baugruppen mit Mitteln zur optischen Kennzeichnung der Betriebszustände mindestens einiger ihrer Bauelemente zu versehen. So läßt sich z.B. aus der Kennzeichnung des Betriebszustandes der Zeitüberwacher oder des Fehlerspeichers eine Aussage darüber treffen, welcher Rechner abgetrennt wurde und wodurch er abgetrennt wurde. Die Wartungsfreundlichkeit des Rechnersystems kann noch dadurch verbessert werden, daß die Rechner beim Erkennen eines funktionsunfähigen Partnerrechners Steuersignale SA1, SA2 bzw. SB1, SB2 oder SC1, SC2 erzeugen, die über zugehörige ODER-Glieder OA1, OA2 bzw. OB1, OB2 bzw. OC1, OC2 jeweils diejenigen Eingänge ihrer UND-Glieder UA bis UC maskieren, denen das von dem ausgefallenen Rechner stammende Synchronisationsbereitschalftssignal bzw. Pseudo-Synchronisationsbereitschaftssignal zuzuführen ist. Hierdurch wird verhindert, daß beim Ziehen der Baugruppe eines Rechners oder beim Ziehen eine Synchronisations-Baugruppe dur Störeinflüsse auf den offenen Eingängen des UND-Gliedes ungewollt Synchronisationsversuche veranlaßt werden, die ggf. zum Abschalten des gesamten Rechnersystems führen. Die einzelnen Rechner generieren sich damit die aus der Synchronisations-Baugruppe des ausgefallenen Rechner stammenden Pseudo-Synchronisationssignale selbst und machen sich damit vollständig unabhängig von der weiteren Mitwirkung dieses Rechners bzw. seiner Synchronisations-Baugruppe. Zur Wiederinbetriebnahme des Rechnersystems im 2 von 3-Betrieb müssen die die UND-Glieder durchschaltenden Steuersignale der Rechner selbstverständlich wieder zurückgenommen werden. Hierzu hat zunächst eine Softwaresynchronisation zu erfolgen, bei der die Programme der Einzelrechner auf eine Genauigkeit von einigen zehn Programmzyklen vorsynchronisiert werden mit anschließender Feinsynchronisierung über die Synchronisations-Baugruppen wie vorstehend näher erläutert.

## Patentansprüche

1. Einrichtung zur Funktionsüberwachung externer Synchronisations-Baugruppen (BGA, BGB, BGC) in einem Mehrrechnersystem mit parallel arbeitenden Einzelrechnern (MCA, MCB, MCC) durch Bewerten der Zeit zwischen von den verschiedenen Rechnern des Mehrrechnersystems oder ihren Synchronisations-Baugruppen erzeugten, das Erreichen eines vorgegebenen Synchronisationspunktes kennzeichnenden Synchronisationsbereitschaftssignalen (SYA, SYB, SYC) und durch Abtrennen eines Rechners, der auf die Synchronisationsbereitschaftssignale der anderen Rechner innerhalb einer vorgegebenen Zeitspanne nicht ebenfalls seine Synchronisationsbereitschaft signalisiert, wobei jedem Rechner (z. B. MCA) eine von Taktsignalen eines Taktgebers steuerbare Hardware-Synchronisations-Baugruppe (BGA) zur Ausgabe der Synchronisationsbereitschaftssignale (SYA) zugeordnet ist, und wobei die Synchronisations-Baugruppen (BGA) durch die Synchronisationsbereitsschaftssignale (SYB, SYC) der anderen Rechner (MCB, MCC) einstellbare erste Zeitüberwacher (ZUA3) aufweisen, die bei Ablauf der vorgegebenen Zeitspanne einen Fehlerspeicher (FSA) einstellen,
**dadurch gekennzeichnet**,
daß jede Synchronisations-Baugruppe (BGA) mit dem Einstellen ihres Fehlerspeichers (FSA) mindestens die sicherheitsrelevanten Ausgabetore des zugeordneten Rechners (MCA) abschaltet und Pseudo-Synchronisationsbereitschaftssignale (SYA) auf die Leitungen aufschaltet, über die die anderen Rechner (MCB, MCC) des Mehrrechersystems bzw. deren Synchronisations-Baugruppen (BGB, BGC) von der Synchronisationsbereitschaft des betreffenden Rechners (MCA) unterrichtet werden, und daß jede Synchronisations-Baugruppe (BGA) zwei weitere Zeitüberwacher (ZUA1, ZUA2) aufweist, deren Verzögerungszeit größer ist als die des ersten Zeitüberwachers (ZUA3) und die beim Abgeben eines Synchronisationsbereitschaftssignals (SYA) durch die zugehörige Synchronisations-Baugruppe (BGA) sowie beim Empfang der Synchronisationsbereitschaftssignale (SYB, SYC) oder Pseudo-Synchronisationsbereitschaftssignale der anderen Synchronisations-Baugruppen (BGB, BGC) einstellbar sind und bei Ablauf ihrer Verzögerungszeit unabhängig voneinander die Abschaltung mindestens der sicherheitsrelevanten Ausgabetore des zugehörigen Rechners (MCA) und der Synchronisations-Baugruppe (BGA) veranlassen.

2. Einrichtung nach Anspruch 1, **dadurch gekenn****zeichnet**, daß die zweiten Zeitüberwacher (ZUA1, ZUA2) die sicherheitsrelevanten Ausgabetore des Rechners (MCA), dem die betreffende Synchronisations-Baugruppe (BGA) zugeordnet ist, auf unterschiedlichem Wege abschalten.

3. Einrichtung nach Anspruch 1, **dadurch gekennzeichnet**, daß jede Synchronisations-Baugruppe (BGA) mindestens ein eingangsseitig von den Synchronisationsbereitschaftssignalen (SYB, SYC) und den Pseudo-Synchronisationsbereitschaftssignalen der anderen Synchronisations-Baugruppen (BGB, BGC) einstellbares UND-Glied (UA) aufweist, dessen Ausgang mittel- oder unmittelbar auf die Einstelleingänge aller drei Zeitüberwacher (ZUA1, ZUA2, ZUA3) der Synchronisations-Baugruppe (BGA) geführt sind.

4. Einrichtung nach Anspruch 3, **dadurch gekenn****zeichnet**, daß den Eingängen des UND-Gliedes (UA) ODER-Glieder (OA1, OA2) vorgeschaltet sind, deren einer Eingang durch die Synchronisationsbereitschafts- und Pseudo-Synchronisationsbereitschaftssignale (SYB, SYC) je einer anderen Synchronisations-Baugruppe (BGB, BGC) und deren anderer Eingang durch ein vom zugehörigen Rechner (MCA) aufschaltbares Steuersignal (SA1, SA2) beaufschlagbar ist.

5. Einrichtung nach Anspruch 4, **dadurch gekennzeichnet**, daß jeder Rechner (MCA) das Ausfallen eines anderen Rechners (z.B. MCB) durch Datenvergleich detektiert und daraufhin dasjenige ODER-Glied (OA2), über das die Synchronisationsbereitschaftssignale (SYB) dieses Rechners (MCB) einzulesen ist, bis zur Wiedereingliederung des ausgefallenen Rechners (MCB) in das Mehrrechnersystem beaufschlagt.

6. Einrichtung nach einem der Ansprüche 1, 3 oder 4, **dadurch gekennzeichnet**, daß die Steuerausgänge der Synchronisations-Baugruppe (BGA) von den die dort anliegenden Steuersignale (SYA) aufnehmenden Steuereingängen der anderen Synchronisations-Baugruppen (BGB, BGC) entkoppelt sind.

7. Einrichtung nach einem der Ansprüche 1 bis 5, **dadurch gekennzeichnet**, daß die Synchronisations-Baugruppen (BGA, BGB, BGC) Mittel zur optischen Kennzeichnung der aktuellen Betriebszustände mindestens einiger ihrer diskreten Bauelemente (ZUA1, ZUA2, ZUA3, FSA) aufweisen.

8. Einrichtung nach Anspruch 1, **dadurch gekennzeichnet**, daß das Vorhandensein vorgegebener Steuersignale (IOW, IOR, MEMS) auf den Rechnerbussen die Durchführung von Synchronisationsvorgängen initiiert.

9. Einrichtung nach Anspruch 1 oder 5, **dadurch ge****kennzeichnet**, daß das Ansprechen der Zeitüberwacher (ZUA1, ZUA2, ZUA3) bei der Inbetriebnahme und der Wiederinbetriebnahme des Mehrrechnersystems für eine vorgegebene Anzahl von Synchronisationszyklen durch Generieren der Pseudo-Synchronisationsbereitschaftssignale (SYA, SYB, SYC) unterbunden ist.

## Claims

1. Device for the functional monitoring of external synchronization modules (BGA, BGB, BGC) in a multicomputer system comprising parallel-operating individual computers (MCA, MCB, MCC) by evaluating the time between synchronization readiness signals (SYA, SYB, SYC) generated by the various computers of the multicomputer system or their synchronization modules and characterizing the attainment of a specified synchronization point and by isolating a computer which does not also signal its synchronization readiness in response to the synchronization readiness signals of the other computers within a specified time interval, a hardware synchronization module (BGA) which can be controlled by clock-pulse signals of a clock-pulse generator being assigned to each computer (e.g. MCA) in order to emit the synchronization readiness signals (SYA) and the synchronization modules (BGA) having first time monitors (ZUA3) which can be activated by the synchronization readiness signals (SYB, SYC) of the other computers (MCB, MCC) which, when the specified time interval has elapsed, activate an error memory (FSA), characterized in that, when its error memory (FSA) is activated, each synchronization module (BGA) shuts down at least the safety-related output gates of the associated computer (MCA) and presents pseudo-synchronization readiness signals (SYA) on the lines via which the other computers (MCB, MCC) of the multicomputer system or their synchronization modules (BGB, BGC) are informed of the synchronization readiness of the computer (MCA) concerned, and in that each synchronization module (BGA) has two further time monitors (ZUA1, ZUA2) whose delay time is greater than that of the first time monitor (ZUA3) and which can be activated when a synchronization readiness signal (SYA) is emitted by the associated synchronization module (BGA) and can be activated when the synchronization readiness signals (SYB, SYC) or pseudo-synchronization readiness signals of the other synchronization modules (BGB, BGC) are received and initiate, when their delay time has elapsed, the shutdown of at least the safety-related output gates of the associated computer (MCA) and of the synchronization module (BGA) independently of one another.

2. Device according to Claim 1, characterized in that the second time monitors (ZUA1, ZUA2) shut down, in a different way, the safety-related output gates of the computer (MCA) with which the synchronization module (BGA) concerned is associated.

3. Device according to Claim 1, characterized in that each synchronization module (BGA) has at least one AND circuit (UA) which can be activated on the input side by the synchronization readiness signals (SYB, SYC) and the pseudo-synchronization readiness signals of the other synchronization modules (BGB, BGC) and whose output is connected, indirectly or directly, to the activation inputs of all three time monitors (ZUA1, ZUA2, ZUA3) of the synchronization module (BGA).

4. Device according to Claim 3, characterized in that there are connected, upstream of the inputs of the AND circuit (UA), OR circuits (OA1, OA2), to one input of which the synchronization readiness signals and pseudo-synchronization readiness signals (SYB, SYC) of one other synchronization module (BGB, BGC) can be applied and to the other input of which a control signal (SA1, SA2) which can be presented by associated computer (MCA) can be applied.

5. Device according to Claim 4, characterized in that each computer (MCA) detects the failure of another computer (for example MCB) by data comparison and then acts upon that OR circuit (OA2) via which the synchronization readiness signals (SYB) of said computer (MCB) are to be read in until the failed computer (MCB) is reincorporated in the multicomputer system.

6. Device according to one of Claims 1, 3 or 4, characterized in that the control outputs of the synchronization module (BGA) are decoupled from those control inputs of the other synchronization modules (BGB, BGC) which receive the control signals (SYA) available at that point.

7. Device according to one of Claims 1 to 5, characterized in that the synchronization modules (BGA, BGB, BGC) have means for visually indicating the current operating state of at least some of their discrete components (ZUA1, ZUA2, ZUA3, FSA).

8. Device according to Claim 1, characterized in that the presence of specified control signals (IOW, IOR, MEMS) on the computer buses initiates the performance of synchronization processes.

9. Device according to Claim 1 or 5, characterized in that the response of the time monitors (ZUA1, ZUA2, ZUA3) is suppressed during the startup and the re-startup of the multicomputer system for a specified number of synchronization cycles by generating the pseudo-synchronization readiness signals (SYA, SYB, SYC).

## Revendications

1. Dispositif pour contrôler le fonctionnement de modules externes de synchronisation (BGA,BGB,BGC) dans un système à ordinateurs multiples, comportant des ordinateurs individuels (MCA,MCB,MCC) opérant en parallèle, par évaluation de la durée entre des signaux d'état prêt pour la synchronisation (SYA,SYB,SYC), qui sont produits par les différents ordinateurs du système à ordinateurs multiples ou par leurs modules de synchronisation et caractérisent le fait qu'un point prédéterminé de synchronisation est atteint, et par débranchement d'un ordinateur, qui, à l'apparition des signaux d'état prêt pour la synchronisation des autres ordinateurs pendant un intervalle de temps prédéterminé ne signale pas non plus son état prêt pour la synchronisation, un module de synchronisation matériel (BGA), qui peut être commandé par des signaux de cadence d'un générateur de cadence et sert à délivrer les signaux (SYA) d'état prêt pour la synchronisation étant associé à chaque ordinateur (par exemple MCA), et les modules de synchronisation (BGA) comportant des premiers dispositifs de contrôle de temps (ZUA3), qui sont réglables par les signaux d'état prêt pour la synchronisation (SYB,SYC) des autres ordinateurs (MCB,MCC) et qui, lorsque l'intervalle de temps prédéterminé est écoulé, règlent une mémoire d'erreurs (FSA),
caractérisé par le fait que chaque module de synchronisation (BGA) débranche, lors du réglage de sa mémoire d'erreurs (FSA), au moins les portes de sortie, relatives à la sécurité, de l'ordinateur (MCA) associé, et applique des signaux de pseudo-état prêt pour la synchronisation (SYA) dans les lignes, au moyen desquelles les autres ordinateurs (MCB,MCC) du système à ordinateur multiple ou leurs modules de synchronisation (BGB,BGC) sont avertis de l'état prêt pour la synchronisation de l'ordinateur concerné (MCA), et chaque module de synchronisation (BGA) comporte deux autres dispositifs de contrôle de temps (ZUA1,ZUA2), dont le retard est supérieur à celui du premier dispositif de contrôle de temps (ZUA3) qui, lors de la délivrance d'un signal d'état prêt pour la synchronisation (SYA) par le module de synchronisation associé (BGA) ainsi que lors de la réception des signaux d'état prêt pour la synchronisation (SYB,SYC) ou de pseudo-signaux d'état prêt pour la synchronisation des autres modules de synchronisation (BGB,BGC), peuvent être réglés et, qui, lorsque leur temps de retard s'est écoulé, déclenchent indépendamment les uns des autres le débranchement au moins des portes de sortie, relatives à la sécurité, de l'ordinateur associé (MCA) et du module de synchronisation (BGA).

2. Dispositif suivant la revendication 1, caractérisé par le fait que les seconds dispositifs de contrôle de temps (ZUA1,ZUA2) débranchent, par des chemins différents, les portes de sortie, relatives à la sécurité, de l'ordinateur (MCA), auquel est associé le module concerné de synchronisation (BGA).

3. Dispositif suivant la revendication 1, caractérisé par le fait que chaque module de synchronisation (BGA) comporte au moins un circuit ET (UA), qui est réglable côté entrée par les signaux d'état prêt pour la synchronisation (SYB,SYC) et par les pseudo-signaux d'état prêt pour la synchronisation des autres modules de synchronisation (BGB,BGC) et dont la sortie est reliée directement ou indirectement aux entrées de réglage de l'ensemble des trois dispositifs de contrôle de temps (ZUA1,ZUA2,ZUA3) du module de synchronisation (BGA).

4. Dispositif suivant la revendication 3, caractérisé par le fait qu'en amont des entrées du circuit ET (UA) sont branchés des circuits OU (OA1, OA2), dont une entrée peut recevoir les signaux d'état prêt pour la synchronisation et les pseudo-signaux d'état prêt pour la synchronisation (SYB,SYC) d'un autre module respectif de synchronisation (BGB,BGC) et dont l'autre entrée peut recevoir un signal de commande (SA1,SA2) pouvant être appliqué par l'ordinateur (MCA) associé.

5. Dispositif suivant la revendication 4, caractérisé par le fait que chaque ordinateur (MCA) détecte la défaillance d'un autre ordinateur (par exemple MCB) au moyen d'une comparaison de données et charge alors le circuit OU (OA2), au moyen duquel les signaux d'état prêt pour la synchronisation (SYB) de cet ordinateur (MCB) doivent être lus, jusqu'à la remise en circuit de l'ordinateur défaillant (MCB) dans le système à ordinateurs multiples.

6. Dispositif suivant l'une des revendications 1, 3 ou 4, caractérisé par le fait que les sorties de commande du module de synchronisation (BGA) sont découplées des entrées de commande, qui reçoivent les signaux de commande (SYA) qui y sont appliqués, des autres modules de synchronisation (BGB,BGC).

7. Dispositif suivant l'une des revendications 1 à 5, caractérisé par le fait que les modules de synchronisation (BGA,BGB,BGC) possèdent des moyens de caractérisation optique des états actuels de fonctionnement d'au moins quelques-uns de leurs composants discrets (ZUA1,ZUA2,ZUA3,FSA)

8. Dispositif suivant la revendication 1, caractérisé par le fait que la présence de signaux de commande prédéterminés (IOW,IOR,MEMS) sur les bus d'ordinateurs déclenche l'exécution de processus de synchronisation.

9. Dispositif suivant la revendication 1 ou 5, caractérisé par le fait que l'action des dispositifs de contrôle de temps (ZUA1,ZUA2,ZUA3) lors de la mise en service et de la remise en service du système à ordinateurs multiples est empêchée pendant un nombre prédéterminé de cycles de synchronisation, par la production des pseudo-signaux d'état prêt pour la synchronisation (SYA,SYB,SYC).
